# FASCICULE DE BREVET EUROPEEN

(11) **EP 2 825 405 B1**
(45) Date de publication et mention de la délivrance du brevet: **18.12.2019**
(21) Numéro de dépôt: 13715319.3
(22) Date de dépôt: 14.03.2013
(51) Int. Cl.: B60K 1/04, B60S 5/06, H01M 2/10

(54) **SYSTÈME DE VERROUILLAGE / DÉVERROUILLAGE D'UN OBJET SOUS UNE STRUCTURE À CROCHET DE RAPPROCHEMENT ET DE SOUTIEN**
SYSTEM ZUR VERSPERRUNG/ENTSPERRUNG EINES OBJEKTS UNTER EINER STRUKTUR MIT EINEM HAKEN ZUM ZIEHEN UND TRAGEN DAVON
SYSTEM FOR LOCKING / UNLOCKING AN OBJECT UNDER A STRUCTURE HAVING A HOOK FOR DRAWING AND SUPPORTING SAME

(30) Priorité: 15.03.2012 FR 1252323
(43) Date de publication de la demande: 21.01.2015
(73) Titulaire: Renault S.A.S., 92100 Boulogne-Billancourt (FR)
(72) Inventeur: POILLOT, Jacques, F-78450 Villepreux (FR); MULATO, Gilles, F-92320 Chatillon (FR); TRENTIN, Stéphane, F-91170 Viry-chatillon (FR); ESCANDE, Bruno, F-78790 Septeuil (FR)
(86) Numéro de dépôt international: PCT/FR2013/050532
(87) Numéro de publication internationale: WO 2013/136017

(56) Documents cités:
- FR-A1- 2 946 571
- FR-A3- 2 943 970
- US-A1- 2011 223 459

## Description

### Domaine technique de l'invention

L'invention concerne un système de verrouillage et/ou de déverrouillage d'un objet, tel qu'une batterie d'alimentation d'un moteur d'entraînement d'un véhicule automobile électrique ou hybride, en dessous d'une structure, telle qu'un châssis du véhicule, le système comportant une pluralité de verrous assurant une fixation de l'objet en dessous de la structure.

L'invention a pour objet aussi un dispositif de montage et/ou de démontage de l'objet en dessous de la structure associant un tel système de verrouillage et/ou de déverrouillage et une pluralité d'outils d'actionnement distincts de la structure et de l'objet pour actionner les verrous. Elle concerne aussi un procédé de démontage et un procédé de montage de l'objet en dessous de la structure.

### État de la technique

Certains véhicules automobiles, comme les véhicules électriques ou hybrides, comprennent un conteneur d'énergie d'alimentation d'un moteur électrique d'entraînement de type batterie électrique d'alimentation. Dans la suite de la description, le terme « batterie » sera utilisé pour une raison de simplification, comme désignant au sens large tout conteneur d'alimentation électrique d'un moteur électrique d'entraînement d'un véhicule. Il peut se révéler intéressant d'échanger cette batterie lorsque son niveau d'énergie est faible contre une nouvelle batterie chargée. Ceci peut être fait dans une station d'échange, comme par exemple une station similaire à une station-service pour le remplissage des réservoirs associés aux moteurs thermiques.

On connaît du document US2011/223459 une méthode de montage et de démontage d'une batterie sur un véhicule au moins partiellement électrique. Plusieurs unités de verrouillage sont montées sur le véhicule, sont contrôlables séparément et comprennent chacune un crochet de fixation configuré pour se coupler ou non à la batterie. La méthode comprend un actionnement de chacune des unités de verrouillage pour faire pivoter le crochet respectif de sorte à engager ou à désengager la batterie. La méthode comprend la mesure d'une position du crochet de chacune des unités de verrouillage pour contrôler individuellement chacune des unités de verrouillage en fonction de la position de son crochet afin de synchroniser les positions de tous les crochets. Un inconvénient majeur de cette solution est l'absence de mise en assiette du véhicule, ce qui nécessite d'embarquer sur le véhicule un mécanisme d'actionnement complexe (au moins un moteur et plusieurs arbres de transmission) pour commander les mouvements des crochets et libérer la batterie de manière autonome. Le coût de cette solution est très élevé, souvent prohibitif et non valorisable pour le client. Cette complexité rend la solution difficilement fiable et implique que son fonctionnement est peu robuste.

Une difficulté supplémentaire pour la mise en place d'un tel concept d'échange de batteries réside dans le fait qu'il existe une multitude de véhicules automobiles pouvant comprendre des batteries de types différents, fixées de manière différentes sur le véhicule automobile. Or il n'est pas envisageable économiquement de multiplier les systèmes de montage et de démontage de ces différents types de batteries ni de mettre en place une solution manuelle en raison de son coût et du poids des batteries. Il existe donc un besoin d'une solution de montage/démontage qui soit universelle et qui puisse être standardisée.

Le document FR 2 943 970 A3 montre le préambule de la revendication 1.

### Objet de l'invention

Pour rendre possible un développement aisé des solutions d'échange de batteries, il est nécessaire de rendre fiable, robuste, flexible et universel le fonctionnement de ces solutions, tout en limitant leur coût.

Le but de la présente invention est de fournir une solution de montage et/ou de démontage qui permettent de remédier aux problèmes évoqués précédemment. En particulier, l'invention propose une solution simple, fiable et robuste, flexible et universelle tout en étant économique.

Un premier aspect de l'invention concerne un système de verrouillage et/ou de déverrouillage d'un objet tel qu'une batterie d'alimentation d'un moteur d'entraînement d'un véhicule automobile électrique ou hybride, en dessous d'une structure telle qu'un châssis du véhicule, le système comportant une pluralité de verrous assurant une fixation de l'objet en dessous de la structure, les verrous étant solidaires de l'objet et/ou de la structure et comprenant chacun d'une part un crochet configuré pour réaliser un rapprochement de l'objet en direction de la structure en comprimant un moyen élastiquement déformable interposé entre l'objet et la structure et pour soutenir l'objet par rapport à la structure en fin de course de rapprochement, et d'autre part un dispositif de transmission entraînant le crochet durant la course de rapprochement et configuré pour être actionné par un outil d'actionnement distinct de la structure et de l'objet.

Le crochet peut être configuré de sorte à varier entre une configuration de verrouillage soutenant l'objet en dessous de la structure et une configuration de déverrouillage libérant l'objet par rapport à la structure, et à exercer un effort de rapprochement de l'objet par rapport à la structure lors du passage vers la configuration de verrouillage pour réaliser ledit rapprochement sur la course de rapprochement, l'effort de rapprochement déformant progressivement le moyen élastiquement déformable sur tout ou partie de la course de rapprochement et le moyen élastiquement déformable exerçant un effort de rappel égal et opposé à l'effort de rapprochement.

Chaque verrou peut comprendre un mécanisme de sécurité variant entre une configuration de blocage dans laquelle le passage du verrou d'une configuration à l'autre est inhibé et une configuration de déblocage dans laquelle le passage du verrou d'une configuration à l'autre est autorisé.

Le dispositif de transmission peut comprendre une vis sans fin et un pignon engrainé sur la vis sans fin, le crochet venant de matière avec le pignon.

La vis sans fin peut comprendre une tête accessible depuis un côté opposé à la structure, en dessous du verrou, par des éléments de vissage et/ou de dévissage appartenant à l'outil d'actionnement.

Le mécanisme de sécurité peut comprendre des éléments de blocage configurés de sorte à empêcher une rotation inopinée de la vis sans fin.

Le système peut comporter au moins trois verrous, chaque verrou comportant des éléments d'appui destinés à coopérer par contact avec des éléments d'appui appartenant à l'outil d'actionnement de sorte à réaliser une mise en assiette de la structure autour d'un axe longitudinal de la structure et/ou autour d'un axe transversal de la structure et éventuellement un soulèvement de la structure selon un axe vertical de la structure à une altitude indépendante de la structure.

Chaque verrou peut coopérer avec des éléments d'accrochage solidaires de l'objet, notamment au niveau d'un support de batterie solidaire de la batterie d'entraînement, configurés de sorte à coopérer avec le crochet du verrou d'une manière permettant l'application par le crochet sur les éléments d'accrochage de l'effort de rapprochement de l'objet en direction de la structure et le soutien de l'objet par le crochet en fin de course de rapprochement.

Un deuxième aspect de l'invention concerne un dispositif de montage et/ou de démontage d'un objet tel qu'une batterie d'alimentation d'un moteur d'entraînement d'un véhicule automobile électrique ou hybride, en dessous d'une structure telle qu'un châssis du véhicule, le dispositif comportant un tel système de verrouillage et/ou de déverrouillage et une pluralité d'outils d'actionnement distincts de la structure et de l'objet, chaque outil d'actionnement étant configuré pour actionner le dispositif de transmission d'un verrou donné du système pour entrainer son crochet de sorte à réaliser un rapprochement de l'objet en direction de la structure en comprimant un moyen élastiquement déformable interposé entre l'objet et la structure et à soutenir l'objet par rapport à la structure en fin de course de rapprochement.

Chaque outil d'actionnement peut comprendre des éléments choisis parmi les suivants :
- des éléments de vissage et/ou de dévissage de la vis sans fin appartenant au dispositif de transmission du verrou,
- des éléments d'appui destinés à coopérer par contact avec des éléments d'appui solidaires du verrou pour la mise en assiette et éventuellement le soulèvement de la structure,
- des éléments de déblocage du mécanisme de sécurité du verrou,
- des éléments d'alignement de l'outil d'actionnement par rapport à l'objet selon l'axe longitudinal et l'axe transversal de la structure.

Un troisième aspect de l'invention concerne un procédé de montage d'un objet tel qu'une batterie d'alimentation d'un moteur d'entraînement d'un véhicule automobile électrique ou hybride, en dessous d'une structure telle qu'un châssis du véhicule, comprenant l'utilisation d'un tel système de verrouillage et/ou de déverrouillage et/ou d'un tel dispositif de montage et/ou de démontage.

Un quatrième aspect de l'invention concerne un procédé de démontage d'un objet tel qu'une batterie d'alimentation d'un moteur d'entraînement d'un véhicule automobile électrique ou hybride, en dessous d'une structure telle qu'un châssis du véhicule, comprenant l'utilisation d'un tel système de verrouillage et/ou de déverrouillage et/ou d'un tel dispositif de montage et/ou de démontage.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'une batterie et des verrous d'un exemple de système de verrouillage/déverrouillage selon l'invention,
- la figure 2 est une vue de dessous d'un châssis de véhicule,
- les figures 3 et 4 sont des vues en perspective, respectivement avant et arrière, de la partie fixée au châssis d'un verrou utilisé à la figure 1,
- et les figures 5 et 6 sont des vues longitudinale-verticale d'un exemple de dispositif de montage/démontage selon l'invention, respectivement en configuration de déverrouillage et en configuration de verrouillage des crochets.

### Description de modes préférentiels de l'invention

L'invention concerne généralement le domaine du montage et/ou du démontage d'un objet en dessous d'une structure. Les principes de l'invention vont être décrits en relation avec une application particulière non limitative où l'objet est une batterie d'alimentation 10 d'un moteur d'entraînement d'un véhicule automobile électrique ou hybride et où la structure est un châssis 11 ou une caisse du véhicule. Toutefois, l'invention peut trouver application dans tout autre domaine où un objet doit être monté et/ou démonté en dessous d'une structure.

Dans cette application particulière où la structure est un châssis ou une caisse de véhicule, la description est faite en référence à un repère orthonormé (X, Y, Z) associé classiquement à un véhicule automobile, dans lequel l'axe X est la direction longitudinale avant-arrière du véhicule dirigée vers l'arrière, l'axe Y est la direction transversale droite-gauche qui est horizontale et perpendiculaire à X, dirigée vers la droite, et l'axe Z est la direction verticale dirigée vers le dessus.

Par la suite, il sera décrit une solution pour répondre aux problématiques de l'art antérieur et mettant en œuvre un dispositif de montage et/ou de démontage de l'objet (ici la batterie d'alimentation 10) en dessous de la structure (ici le châssis 11 du véhicule). Ce dispositif de montage/démontage comporte essentiellement un système de verrouillage et/ou de déverrouillage qui sera décrit en détails plus loin et une pluralité d'outils d'actionnement 12 distincts de la structure et de l'objet et destinés à coopérer avec le système de verrouillage et/ou de déverrouillage, pour notamment commander une action sélectivement de verrouillage ou de déverrouillage de l'objet sous la structure.

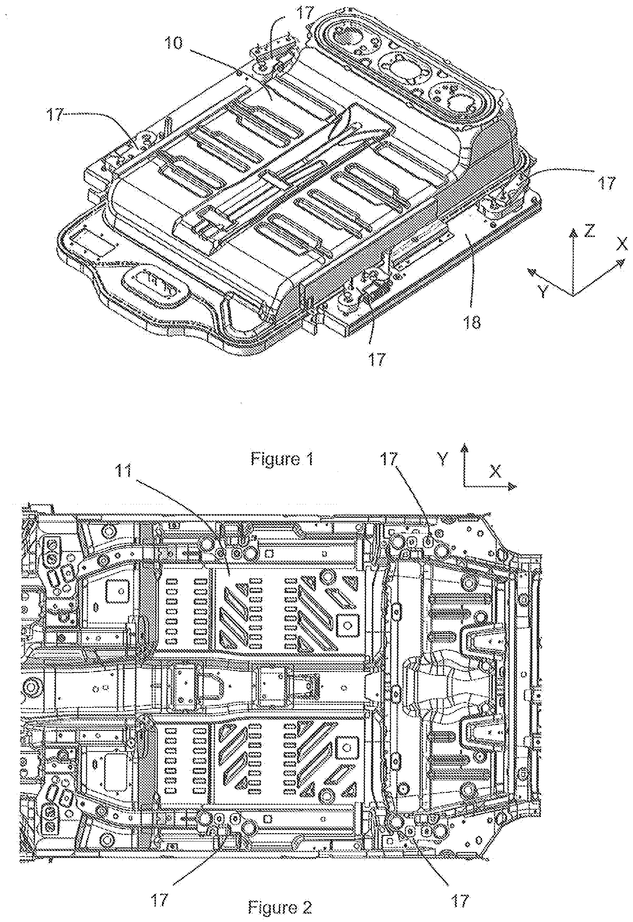

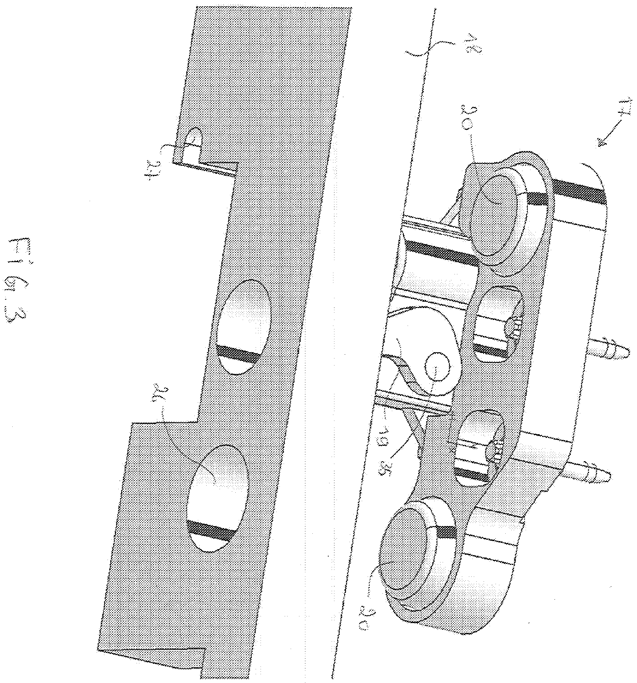

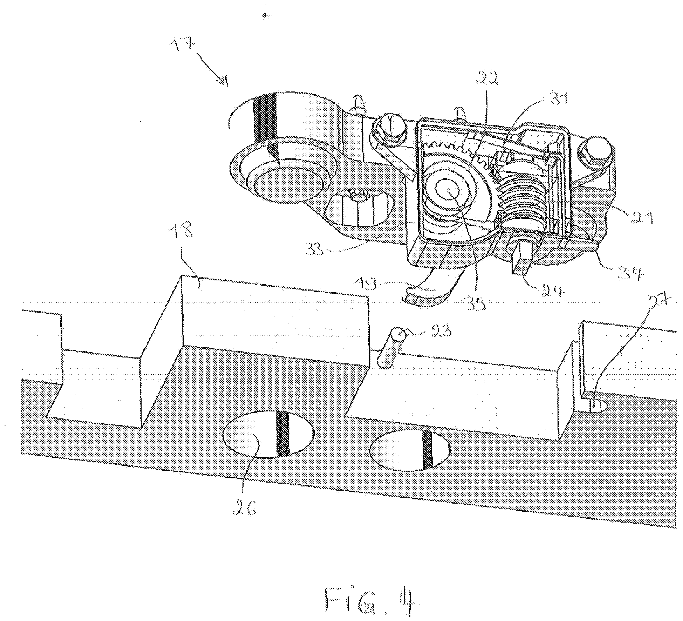

Le système de verrouillage et/ou de déverrouillage de l'objet (ici la batterie d'alimentation 10) en dessous de la structure (ici le châssis 11 du véhicule) comporte une pluralité de verrous de fixation 17 assurant une fixation de l'objet en dessous de la structure. Les verrous 17 sont solidaires de la structure dans l'exemple illustré, mais alternativement ou en combinaison ils peuvent être solidaires de l'objet. Les figures 3 et 4 illustrent notamment l'un de ces verrous 17. La figure 1 représente d'une part l'objet, qui comprend la batterie 10 et un support de batterie 18 (aussi connu sous le nom de brancard) solidaire de la batterie 10, d'autre part les verrous 17 (la structure n'est donc pas représentée sur la figure 1 mais seulement sur la figure 2).

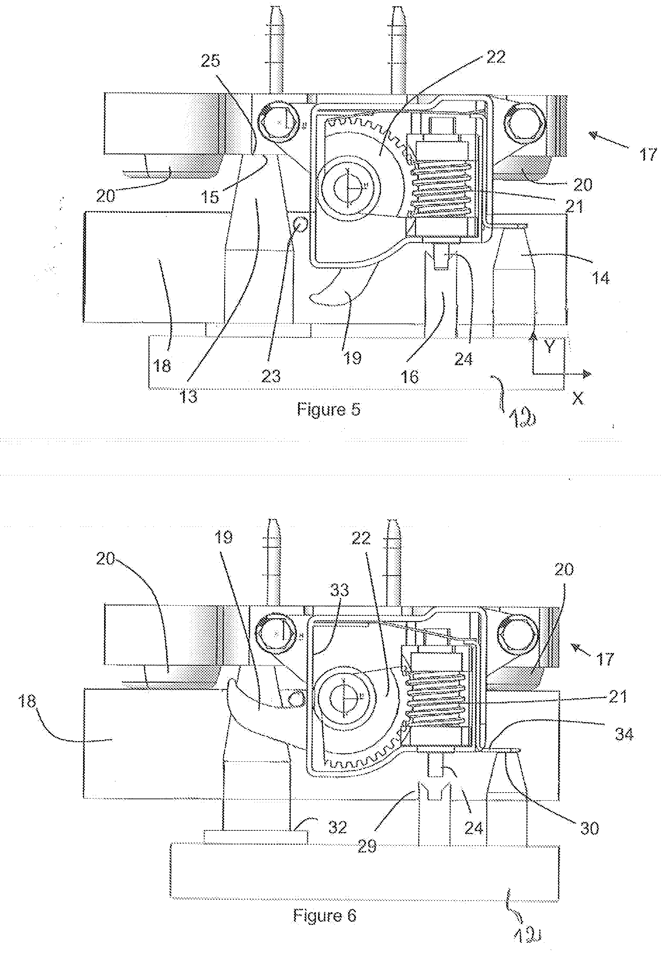

En référence aux figures 3 à 6 notamment, chaque verrou 17 comprend un crochet 19 configuré pour réaliser un rapprochement de l'objet en direction de la structure en comprimant progressivement un moyen élastiquement déformable 20 interposé entre l'objet et la structure et pour soutenir l'objet par rapport à la structure en fin de course de rapprochement. Les figures 5 et 6 représentent le dispositif respectivement avant et après la course de rapprochement de l'objet par l'action combinée de la pluralité de crochets 19. Il convient de préciser que la déformation du moyen élastiquement déformable peut être exécutée sur tout ou partie de la course de rapprochement.

Le crochet 19 présente des dimensions et une forme lui permettant finalement d'être configuré de sorte à :
- varier entre une configuration de verrouillage soutenant l'objet en dessous de la structure (figure 6) et une configuration de déverrouillage libérant l'objet par rapport à la structure (figure 5),
- et exercer un effort de rapprochement de l'objet par rapport à la structure lors du passage vers la configuration de verrouillage pour réaliser ledit rapprochement sur la course de rapprochement, l'effort de rapprochement déformant progressivement le moyen élastiquement déformable sur tout ou partie de la course de rapprochement et le moyen élastiquement déformable exerçant un effort de rappel égal et opposé à l'effort de rapprochement.

Le crochet 19 est notamment conçu de sorte qu'en configuration de verrouillage, il forme un angle par rapport à l'axe Z de sorte à permettre une reprise d'efforts opposée à la fois au poids de l'objet et aux efforts de rappel du moyen élastiquement déformable, qui occupe alors un état déformé sous l'action de l'objet lui-même sollicité par la pluralité de crochets 19, vers son état non déformé. Le crochet 19 empêche également, jusqu'à un certain niveau d'effort, tout mouvement de la batterie par rapport aux axes X et Y, évitant notamment les déplacements de faible amplitude. D'autre part, la forme du crochet 19 lui permet de coopérer avec des éléments d'accrochage 23 solidaires de l'objet (par exemple au moins un anneau ou équivalent solidaire du support de batterie 18) de sorte à transmettre à ces derniers l'effort de rapprochement sous la seule action de déplacement du crochet 19 vers sa configuration de verrouillage par entraînement par le dispositif de transmission. Notamment, l'agencement des éléments d'accrochage 23 solidaires de l'objet et l'agencement du crochet 19 sont tels que le simple déplacement du crochet 19 en direction de sa configuration de verrouillage permet une saisie automatique des éléments d'accrochage 23 par le crochet 19 puis l'application de l'effort de rapprochement du crochet 19 à l'objet au niveau des éléments d'accrochage 23. Ainsi, chaque verrou 17 coopère avec ces éléments d'accrochage 23 configurés de sorte à coopérer avec le crochet 19 du verrou 17 d'une manière permettant d'une part l'application par le crochet 19 sur les éléments d'accrochage 23 de l'effort de rapprochement de l'objet en direction de la structure et d'autre part le soutien de l'objet par le crochet 19 en fin de course de rapprochement.

Par « moyen élastiquement déformable », on entend tout moyen se déformant élastiquement sous l'effet d'un effort, notamment orienté verticalement selon Z et dirigé vers le dessus. Ainsi, le système de verrouillage et/ou de déverrouillage comprend ce moyen élastiquement déformable disposé à l'interface objet-structure et destiné à exercer un effort de rappel d'éloignement de l'objet par rapport à la structure en direction opposé à l'effort de rapprochement appliqué par la pluralité de crochets 19. Par exemple, le moyen élastiquement déformable peut comprendre un ou plusieurs plots 20 en matériau élastomère, solidaires du verrou 17. Néanmoins, tout moyen élastiquement déformable peut convenir, notamment un ou plusieurs ressort(s). Bien que dans la variante illustrée les différents moyens élastiquement déformables intégrés au système soient solidaires des verrous 17 et donc de la structure, il est clair que le moyen élastiquement déformable peut alternativement ou en combinaison être solidaire de l'objet, par exemple au niveau du support de batterie 18 et/ou de la batterie 10 elle-même. Les moyens élastiquement déformables permettent d'appliquer, grâce aux efforts de rappel d'éloignement qu'ils appliquent à l'objet, un effort global de contrainte entre la structure et l'objet de façon à immobiliser ceux-ci, l'un par rapport à l'autre, en translation selon les axes X et Y grâce à des phénomènes de frottement à l'interface objet-structure lorsque les crochets 19 de l'ensemble des verrous 17 sont en fin de course de rapprochement.

D'autre part, chaque verrou 17 comprend un dispositif de transmission entraînant le crochet 19 sur sa course de rapprochement. Le dispositif de transmission est avantageusement configuré pour être actionné par l'un des outils d'actionnement 12. Notamment, il sera prévu un nombre d'outils d'actionnement 12 égal au nombre de verrous 17, chacun des outils 12 permettant d'actionner le dispositif de transmission de l'un des verrous 17. Plus précisément, chaque outil d'actionnement 12 est configuré pour actionner le dispositif de transmission d'un verrou 17 donné du système pour entrainer son crochet 19 de sorte à :
- réaliser le rapprochement de l'objet en direction de la structure en comprimant le moyen élastiquement déformable,
- soutenir l'objet par rapport à la structure en fin de course de rapprochement,
- permettre uniquement, par synchronisation des outils d'actionnement 12, un mouvement de translation de l'objet selon l'axe vertical Z, c'est-à-dire sans aucun mouvement de rotation autour de cet axe Z.

Dans une variante particulièrement avantageuse en raison de sa simplicité et de son efficacité, le dispositif de transmission que comprend chaque verrou 17 pour entrainer le crochet 19 de la configuration de déverrouillage (figure 5) vers la configuration de verrouillage (figure 6), ou réciproquement, comprend une vis sans fin 21 et un pignon 22 engrainé sur la vis sans fin 21. Avantageusement, le crochet 19 vient de matière avec le pignon 22, en ce sens que le crochet 19 et le pignon 22 sont monoblocs, d'un seul tenant. La mise en rotation de la vis sans fin 21 dans le sens de vissage met en rotation le pignon 22 vers le haut autour d'un axe de pivotement horizontal de pivotement repéré 35. Le crochet 19, par le pivotement du pignon 22, se déplace vers le haut. La mise en rotation de la vis sans fin 21 dans un sens inverse entraine le crochet 19 vers le bas dans un sens de pivotement opposé du pignon 22.

Le dispositif de transmission peut être conçu de sorte à immobiliser le crochet 19 dans sa configuration de verrouillage en s'opposant à l'effet sur le crochet 19 de l'application du poids de l'objet soutenu et des efforts de rappel du moyen élastiquement déformable. Pour cela, le dispositif de transmission présente un fonctionnement non réversible, en ce sens que la transmission de mouvement peut se faire uniquement de la vis sans fin 21 au pignon 22, les efforts appliqués par le pignon 22 en raison du poids de l'objet soutenu et des efforts de rappel du moyen élastiquement déformable ne pouvant en aucun cas être suffisants pour entraîner en rotation la vis sans fin 21. Ainsi, le dispositif de transmission assure un blocage positif du crochet 19 dans sa configuration de verrouillage.

Pour permettre l'actionnement du verrou 17 par l'intermédiaire d'un outil 12 donné avantageusement distinct de la structure et de l'objet (limitant la complexité, le poids et le coût des éléments embarqués à demeure à bord de la structure), la vis sans fin 21 comprend une tête 24 accessible depuis un côté opposé à la structure, en dessous du verrou 17, par des éléments de vissage et/ou de dévissage 16 appartenant à l'outil d'actionnement 12. Il peut avantageusement s'agir d'une visseuse standard.

De manière plus générale, outre les éléments de vissage et/ou de dévissage 16 de la vis sans fin 21 appartenant au dispositif de transmission du verrou 17, chaque outil d'actionnement 12 comprend des éléments choisis parmi les suivants :
- des éléments d'appui 15 destinés à coopérer par contact avec des éléments d'appui 25 solidaires du verrou 17 (et/ou de la structure) pour une mise en assiette et éventuellement un soulèvement selon Z de la structure à une altitude d'échange,
- des éléments de déblocage 30 d'un mécanisme de sécurité (décrit plus loin) du verrou 17,
- des éléments d'alignement 13, 14 de l'outil d'actionnement 12 par rapport à l'objet selon l'axe longitudinal X et l'axe transversal Y de la structure.

Avantageusement, le système de verrouillage et/ou de déverrouillage comporte au moins trois verrous 17, chaque verrou 17 comportant des éléments d'appui 25 destinés à coopérer par contact avec les éléments d'appui 15 appartenant à l'outil d'actionnement 12 de sorte à réaliser la mise en assiette de la structure autour de l'axe longitudinal X de la structure et/ou autour de l'axe transversal Y de la structure et éventuellement le soulèvement de la structure selon l'axe vertical Z de la structure à une altitude indépendante de la structure. L'agencement d'au moins trois verrous 17 chacun muni d'éléments d'appui 25 permettant la mise en assiette par une coopération par appui avec des éléments 15 solidaires des outils 12 permet une mise en assiette simple et efficace directement au niveau des outils d'actionnement 12, l'actionnement des crochets 19 pouvant dès lors être très simple et avantageusement déporté de la structure par des outils 12 distincts de la structure et de l'objet.

On entend par « mise en assiette » une opération consistant à appliquer à la structure des efforts mécaniques permettant d'orienter la structure selon une orientation spatiale donnée (incluse ou non) par rapport au plan (X, Y), cette orientation donnée étant en outre indépendante du type de structure et des conditions de chargement éventuel du véhicule.

Dans un mode de réalisation présentant l'avantage de sa simplicité et de son efficacité, les éléments d'alignement 13, 14 solidaires de l'outil 12 sont configurés de sorte à coopérer par introduction ou insertion avec des éléments de centrage 26, 27 prévus sur l'objet, c'est-à-dire que les éléments d'alignement 13, 14 s'insèrent dans les éléments de centrage 26, 27 et/ou les éléments de centrage 26, 27 s'insèrent dans les éléments d'alignement 13, 14. Dans la variante particulière illustrée, les deux éléments d'alignement 13, 14 de chacun des outils 12 sont constitués par des pilotes au moins partiellement coniques pour un auto-centrage. Ces deux pilotes viennent s'insérer dans deux trous (ou oreilles, ou lumières ou équivalents) constitutifs des éléments de centrage 26, 27, respectivement, ménagés dans le support de batterie 18 solidaire de la batterie 10. Autrement dit, les trous permettant le centrage des pilotes (par coopération par introduction) sont solidaires de l'objet. L'aménagement d'au moins deux pilotes au niveau de chacun des outils 12 permet en outre de bloquer la rotation selon Z de l'objet par rapport à l'outil 12 en situation de coopération par introduction.

En complément, le support de batterie 18 peut être pourvu d'un trou 29 supplémentaire pour le passage des éléments 16 de vissage/dévissage à travers l'objet à monter sur la structure, pour donner accès à la tête 24 du verrou 17 à actionner.

Avantageusement, par simplicité, les éléments d'appui 15 et/ou les éléments de déblocage 30 sont constitués par une extrémité supérieure (selon Z) d'au moins l'un des éléments d'alignement 13, 14. Dans la variante illustrée, les éléments d'appui 15 sont constitués par l'extrémité supérieure de l'élément d'alignement 13 tandis que les éléments de déblocage 30, conçus par exemple pour agir par une poussée verticale, sont constitués par l'extrémité supérieure de l'élément d'alignement 14.

Comme indiqué précédemment, chaque verrou 17 comprend un mécanisme de sécurité variant entre une configuration de blocage dans laquelle le passage du verrou 17 d'une configuration à l'autre est inhibé et une configuration de déblocage dans laquelle le passage du verrou 17 d'une configuration à l'autre est autorisé. Notamment, le mécanisme de sécurité comprend des éléments de blocage 31 configurés de sorte à empêcher une rotation inopinée de la vis sans fin 21 dans la configuration de blocage du mécanisme.

Pour la mise en œuvre des outils 12 impliquant un déplacement selon Z (ce déplacement étant nécessaire au moins pour l'opération d'alignement, pour l'opération de mise en assiette et éventuellement pour l'opération de soulèvement), le dispositif de montage/démontage qui comprend la pluralité de tels outils 12, comprend en outre des éléments élévateurs sur lesquels les outils 12 sont montés.

La nature des éléments de déblocage 30 dépend de la nature du mécanisme de sécurité, en particulier de la nature des éléments de blocage 31. Par exemple comme illustré sur les figures 3 à 6, l'élément de blocage 31 comprend une lamelle souple agencée au niveau de l'extrémité supérieure de la vis sans fin 21 opposée à l'extrémité inférieure munie de la tête 24. Cette lamelle, avantageusement flexible, est fixée à une extrémité à un boîtier 33 renfermant le mécanisme de sécurité, la vis sans fin 21 et le pignon 22. L'extrémité opposée de la lamelle peut être poussée vers le dessus, en déformant élastiquement la lamelle, par une extrémité supérieure d'un loquet de sécurité 34 déplaçable par translation de haut en bas et dont l'extrémité inférieure vient à l'extérieur du boîtier 33 pour être elle-même déplacée sous l'action de la poussée appliquée par l'élément de déblocage 30. Seule l'extrémité inférieure du loquet 34, le crochet 19 et la tête 24 de la vis sans fin 21 viennent à l'extérieur du boîtier 33. Le fonctionnement est le suivant : lorsqu'aucune action de poussée n'est appliquée par l'élément de déblocage 30 sur le loquet 34, la lamelle occupe sa configuration naturelle dans laquelle elle est en prise avec un organe complémentaire agencé à l'extrémité supérieure de la vis sans fin 21, cette coopération entre la lamelle et cet organe assurant le blocage en rotation de la vis sans fin 21. Le mécanisme de sécurité adopte alors sa configuration de blocage. Au moment où l'élément de déblocage 30 de l'outil 12 assure une poussée vers le haut sur le loquet 34, celui-ci se déplace vers le haut en déformant la lamelle qui libère alors l'organe agencé à l'extrémité supérieure de la vis sans fin 21. Celle-ci peut alors ensuite être mise en rotation par une action de vissage ou de dévissage appliquée par l'élément de vissage et/ou de dévissage 16 au niveau de la tête 24. Le mécanisme de sécurité adopte alors la configuration de déblocage. Le retour en configuration de blocage peut résulter de la libération du loquet 34 par les éléments de déblocage 30 et du retour élastique de la lamelle dans sa situation de coopération avec la vis sans fin 21.

Dans un mode particulier, les éléments de déblocage 30 sont configurés de sorte que la mise en contact des éléments d'appui 15 contre le dessous de la structure, lors de la mise en assiette de la structure par rapport au plan (X, Y) et éventuellement de son soulèvement selon la direction Z, entraîne automatiquement l'actionnement, par les éléments de déblocage 30, du mécanisme de sécurité vers sa configuration de déblocage de la manière décrite ci-dessus au niveau du loquet 34. Autrement dit, c'est uniquement l'action des éléments élévateurs associés aux outils 12 qui provoquent le passage à la configuration de déblocage du mécanisme de sécurité au moment de la mise en appui des outils 12 contre la structure.

Préférentiellement, les éléments d'appui 15 sont configurés pour venir en contact, lors de la mise en assiette de la structure et éventuellement de son soulèvement, non pas avec la structure mais avec le verrou 17 (ou éventuellement avec un support de verrou interposé entre le verrou 17 et la structure pour relier un verrou 17 donné à la structure, i.e. au châssis 11 de véhicule). Le dessous de la structure contre lequel les éléments d'appui 15 viennent en appui au moment de la mise en assiette de la structure et éventuellement de son soulèvement est formé en pratique par une face inférieure du verrou 17 (ou une face inférieure du support de verrou). De telles caractéristiques permettent de rendre la solution indépendante du type de structure, ce qui la rend facilement standardisable.

Pour pouvoir supporter la batterie 10 après sa libération par les verrous 17, chaque outil 12 comprend en outre un élément de portage 32 destiné à supporter l'objet (batterie 10) après sa libération par les verrous 17 par rapport à la structure (châssis 11). Dans la variante illustrée, l'élément de portage 32 est formé simplement par un épaulement prévu sur le pilote constitutif de l'élément d'alignement 13.

Le fonctionnement du dispositif de montage et/ou de démontage de l'objet en dessous de la batterie est le suivant :
Lorsque l'on souhaite monter un objet en dessous de la structure, il convient dans un premier temps de fournir l'objet et la structure en interposant entre eux le moyen élastiquement déformable. Puis, les dispositifs de transmission de l'ensemble des verrous 17 sont actionnés par autant d'outils d'actionnement 12 distincts de la structure et de l'objet, de sorte à entraîner les crochets 19 des verrous 17 afin de réaliser un rapprochement de l'objet en direction de la structure en comprimant le moyen élastiquement déformable, puis de soutenir l'objet par rapport à la structure en fin de course de rapprochement.

Lorsque l'on souhaite démonter un objet depuis le dessous d'une structure par contre, un moyen élastiquement déformable étant interposé entre l'objet et la structure dans un état comprimé, les dispositifs de transmission de l'ensemble des verrous 17 sont actionnés par autant d'outils d'actionnement 12 distincts de la structure et de l'objet, de sorte à entraîner les crochets 19 des verrous 17 afin de libérer l'objet par rapport à la structure et de réaliser un éloignement de l'objet en direction opposée à la structure en libérant le moyen élastiquement déformable de son état comprimé.

La solution précédemment décrite présente en outre les avantages suivants :
- le dispositif de montage et/ou de démontage intègre les fonctions de centrage et d'appui pour la mise en assiette du véhicule nécessaires à la réussite du verrouillage de la batterie, ainsi que la fonction d'irréversibilité du verrouillage (mécanisme de sécurité et élément de déblocage 30),
- il n'y a pas de nécessité de créer de point de référence de mise en assiette sur le véhicule autre que le point d'appui de l'élément d'appui 15, impliquant une simplification de la conception,
- la fiabilité est bonne en raison du peu d'actionneurs utilisés,
- elle évite d'avoir à gérer une course trop importante dans l'entrefer entre la batterie 10 et la caisse lors du verrouillage, ce qui implique une conception du joint plus simple (moins d'amplitude de compression),
- elle garantit un mouvement d'accostage des connecteurs et des joints à assiette stable sans moyens supplémentaires ;
- elle permet un gain de 50% sur le temps d'échange batterie par rapport aux solutions existantes,
- la fonction de centrage via les trous pilotes dans les supports de batterie 18 intègre également la fonction de points de référence en deux points, permettant une manutention et un maintien de la batterie simplifiés lors des transferts de celle-ci.

## Revendications

1. Système de verrouillage et/ou de déverrouillage d'un objet tel qu'une batterie d'alimentation (10) d'un moteur d'entraînement d'un véhicule automobile électrique ou hybride, en dessous d'une structure telle qu'un châssis (11) du véhicule, le système comportant une pluralité de verrous (17) assurant une fixation de l'objet en dessous de la structure, le système est **caractérisé en ce que** les verrous (17) sont solidaires de l'objet et/ou de la structure et comprennent chacun d'une part un crochet (19) configuré pour réaliser un rapprochement de l'objet en direction de la structure en comprimant un moyen élastiquement déformable (20) interposé entre l'objet et la structure et pour soutenir l'objet par rapport à la structure en fin de course de rapprochement, et d'autre part un dispositif de transmission (21, 22, 24) entraînant le crochet (19) durant la course de rapprochement et configuré pour être actionné par un outil d'actionnement (12) distinct de la structure et de l'objet.

2. Système de verrouillage et/ou de déverrouillage selon la revendication 1, **caractérisé en ce que** le crochet (19) est configuré de sorte à varier entre une configuration de verrouillage soutenant l'objet en dessous de la structure et une configuration de déverrouillage libérant l'objet par rapport à la structure, et à exercer un effort de rapprochement de l'objet par rapport à la structure lors du passage vers la configuration de verrouillage pour réaliser ledit rapprochement sur la course de rapprochement, l'effort de rapprochement déformant progressivement le moyen élastiquement déformable (20) sur tout ou partie de la course de rapprochement et le moyen élastiquement déformable (20) exerçant un effort de rappel égal et opposé à l'effort de rapprochement.

3. Système de verrouillage et/ou de déverrouillage selon la revendication 2, caractérisé en ce chaque verrou (17) comprend un mécanisme de sécurité variant entre une configuration de blocage dans laquelle le passage du verrou (17) d'une configuration à l'autre est inhibé et une configuration de déblocage dans laquelle le passage du verrou (17) d'une configuration à l'autre est autorisé.

4. Système de verrouillage et/ou de déverrouillage selon l'une des revendications 1 à 3, **caractérisé en ce que** le dispositif de transmission (21, 22, 24) comprend une vis sans fin (21) et un pignon (22) engrainé sur la vis sans fin (21), le crochet (19) venant de matière avec le pignon (22).

5. Système de verrouillage et/ou de déverrouillage selon la revendication 4, **caractérisé en ce que** la vis sans fin (21) comprend une tête (24) accessible depuis un côté opposé à la structure, en dessous du verrou (17), par des éléments de vissage et/ou de dévissage (16) appartenant à l'outil d'actionnement (12).

6. Système de verrouillage et/ou de déverrouillage selon l'une des revendications 4 et 5, **caractérisé en ce que** le mécanisme de sécurité comprend des éléments de blocage (31) configurés de sorte à empêcher une rotation inopinée de la vis sans fin (21).

7. Système de verrouillage et/ou de déverrouillage selon l'une des revendications 1 à 6, **caractérisé en ce qu'**il comporte au moins trois verrous (17), chaque verrou (17) comportant des éléments d'appui (25) destinés à coopérer par contact avec des éléments d'appui (15) appartenant à l'outil d'actionnement (12) de sorte à réaliser une mise en assiette de la structure autour d'un axe longitudinal (X) de la structure et/ou autour d'un axe transversal (Y) de la structure et éventuellement un soulèvement de la structure selon un axe vertical (Z) de la structure à une altitude indépendante de la structure.

8. Système de verrouillage et/ou de déverrouillage selon l'une des revendications 1 à 7, **caractérisé en ce que** chaque verrou (17) coopère avec des éléments d'accrochage (23) solidaires de l'objet, notamment au niveau d'un support de batterie (18) solidaire de la batterie d'entraînement (10), configurés de sorte à coopérer avec le crochet (19) du verrou (17) d'une manière permettant l'application par le crochet (19) sur les éléments d'accrochage (23) de l'effort de rapprochement de l'objet en direction de la structure et le soutien de l'objet par le crochet (19) en fin de course de rapprochement.

9. Dispositif de montage et/ou de démontage d'un objet tel qu'une batterie d'alimentation (10) d'un moteur d'entraînement d'un véhicule automobile électrique ou hybride, en dessous d'une structure telle qu'un châssis (11) du véhicule, le dispositif comportant un système de verrouillage et/ou de déverrouillage selon l'une quelconque des revendications précédentes et une pluralité d'outils d'actionnement (12) distincts de la structure et de l'objet, chaque outil d'actionnement (12) étant configuré pour actionner le dispositif de transmission (21, 22, 24) d'un verrou (17) donné du système pour entrainer son crochet (19) de sorte à réaliser un rapprochement de l'objet en direction de la structure en comprimant un moyen élastiquement déformable (20) interposé entre l'objet et la structure et à soutenir l'objet par rapport à la structure en fin de course de rapprochement.

10. Dispositif de montage et/ou de démontage selon la revendication 9, **caractérisé en ce que** chaque outil d'actionnement (12) comprend des éléments choisis parmi les suivants :
- des éléments de vissage et/ou de dévissage (16) de la vis sans fin (21) appartenant au dispositif de transmission du verrou (17),
- des éléments d'appui (15) destinés à coopérer par contact avec des éléments d'appui (25) solidaires du verrou (17) pour la mise en assiette et éventuellement le soulèvement de la structure,
- des éléments de déblocage (30) du mécanisme de sécurité du verrou (17),
- des éléments d'alignement (13, 14) de l'outil d'actionnement par rapport à l'objet selon l'axe longitudinal (X) et l'axe transversal (Y) de la structure.

11. Procédé de montage d'un objet tel qu'une batterie d'alimentation (10) d'un moteur d'entraînement d'un véhicule automobile électrique ou hybride, en dessous d'une structure telle qu'un châssis (11) du véhicule, **caractérisé en ce qu'**il comprend l'utilisation d'un système de verrouillage et/ou de déverrouillage selon l'une des revendications 1 à 8 et/ou d'un dispositif de montage et/ou de démontage selon l'une des revendications 9 et 10.

12. Procédé de démontage d'un objet tel qu'une batterie d'alimentation (10) d'un moteur d'entraînement d'un véhicule automobile électrique ou hybride, en dessous d'une structure telle qu'un châssis (11) du véhicule, **caractérisé en ce qu'**il comprend l'utilisation d'un système de verrouillage et/ou de déverrouillage selon l'une des revendications 1 à 8 et/ou d'un dispositif de montage et/ou de démontage selon l'une des revendications 9 et 10.

## Patentansprüche

1. System zum Verriegeln und/oder Entriegeln eines Gegenstands wie einer Speisebatterie (10) eines Antriebsmotors eines Elektro- oder Hybridkraftfahrzeugs unter einer Struktur wie einem Fahrgestell (11) des Fahrzeugs, wobei das System eine Vielzahl von Riegeln (17) umfasst, die eine Fixierung des Gegenstands unter der Struktur gewährleisten, wobei das System **dadurch gekennzeichnet ist, dass** die Riegel (17) mit dem Gegenstand und/oder der Struktur fest verbunden sind und jeweils einerseits einen Haken (19) umfassen, der dazu ausgestaltet ist, ein Annähern des Gegenstands in Richtung der Struktur auszuführen, wobei ein zwischen dem Gegenstand und der Struktur angeordnetes elastisch verformbares Mittel (20) zusammengedrückt wird, und den Gegenstand am Ende des Annäherungshubs in Bezug auf die Struktur zu halten, und andererseits eine Getriebevorrichtung (21, 22, 24), die den Haken (19) während des Annäherungshubs antreibt und dazu ausgestaltet ist, mit einem Betätigungswerkzeug (12), das von der Struktur und dem Gegenstand getrennt ist, betätigt zu werden.

2. System zum Verriegeln und/oder Entriegeln nach Anspruch 1, **dadurch gekennzeichnet, dass** der Haken (19) so ausgestaltet ist, dass er zwischen einer Verriegelungskonfiguration, in der er den Gegenstand unter der Struktur hält, und einer Entriegelungskonfiguration, in der er den Gegenstand in Bezug auf die Struktur freigibt, wechselt und beim Übergang in die Verriegelungskonfiguration eine Kraft zum Annähern des Gegenstands in Bezug auf die Struktur ausübt, um das Annähern über den Annäherungshub auszuführen, wobei die Annäherungskraft das elastisch verformbare Mittel (20) über den gesamten oder einen Teil des Annäherungshubs zunehmend verformt und das elastisch verformbare Mittel (20) eine Rückstellkraft ausübt, die gleich der und entgegengesetzt zur Annäherungskraft ist.

3. System zum Verriegeln und/oder Entriegeln nach Anspruch 2, **dadurch gekennzeichnet, dass** jeder Riegel (17) einen Sicherheitsmechanismus umfasst, der zwischen einer Sperrkonfiguration, in welcher der Übergang des Riegels (17) aus einer Konfiguration in die andere blockiert ist, und einer Entsperrkonfiguration, in welcher der Übergang des Riegels (17) aus einer Konfiguration in die andere zugelassen wird, wechselt.

4. System zum Verriegeln und/oder Entriegeln nach einem der Ansprüche 1 bis 3, **dadurch gekennzeichnet, dass** die Getriebevorrichtung (21, 22, 24) eine Schnecke (21) und ein mit der Schnecke (21) verzahntes Zahnrad (22) umfasst, wobei der Haken (19) einstückig mit dem Zahnrad (22) ist.

5. System zum Verriegeln und/oder Entriegeln nach Anspruch 4, **dadurch gekennzeichnet, dass** die Schnecke (21) einen Kopf (24) umfasst, der von einer der Struktur entgegengesetzten Seite aus unter dem Riegel (17) für Einschraub- und/oder Abschraubelemente (16), die zum Betätigungswerkzeug (12) gehören, zugänglich ist.

6. System zum Verriegeln und/oder Entriegeln nach einem der Ansprüche 4 und 5, **dadurch gekennzeichnet, dass** der Sicherheitsmechanismus Sperrelemente (31) umfasst, die so ausgestaltet sind, dass sie ein unerwartetes Drehen der Schnecke (21) verhindern.

7. System zum Verriegeln und/oder Entriegeln nach einem der Ansprüche 1 bis 6, **dadurch gekennzeichnet, dass** es mindestens drei Riegel (17) umfasst, wobei jeder Riegel (17) Anlageelemente (25) umfasst, die dazu bestimmt sind, mit zum Betätigungswerkzeug (12) gehörenden Anlageelementen (15) durch Kontakt so zusammenzuwirken, dass eine Trimmung der Struktur um eine Längsachse (X) der Struktur und/oder um eine Querachse (Y) der Struktur und gegebenenfalls ein Anheben der Struktur entlang einer vertikalen Achse (Z) der Struktur auf eine von der Struktur unabhängige Höhe ausgeführt wird.

8. System zum Verriegeln und/oder Entriegeln nach einem der Ansprüche 1 bis 7, **dadurch gekennzeichnet, dass** jeder Riegel (17) mit Einhakelementen (23) zusammenwirkt, die fest mit dem Gegenstand verbunden sind, insbesondere an einem fest mit der Antriebsbatterie (10) verbundenen Batterieträger (18), und die so ausgestaltet sind, dass sie mit dem Haken (19) des Riegels (17) auf eine Weise zusammenwirken, die das Aufbringen der Kraft zum Annähern des Gegenstands in Richtung der Struktur durch den Haken (19) auf die Einhakelemente (23) und das Halten des Gegenstands durch den Haken (19) am Ende des Annäherungshubs ermöglicht.

9. Vorrichtung zur Montage und/oder Demontage eines Gegenstands wie einer Speisebatterie (10) eines Antriebsmotors eines Elektro- oder Hybridkraftfahrzeugs unter einer Struktur wie einem Fahrgestell (11) des Fahrzeugs, wobei die Vorrichtung ein System zum Verriegeln und/oder Entriegeln nach einem der vorhergehenden Ansprüche und eine Vielzahl von Betätigungswerkzeugen (12), die von der Struktur und dem Gegenstand getrennt sind, umfasst, wobei jedes Betätigungswerkzeug (12) dazu ausgestaltet ist, die Getriebevorrichtung (21, 22, 24) eines gegebenen Riegels (17) des Systems zu betätigen, um dessen Haken (19) so anzutreiben, dass eine Annäherung des Gegenstands in Richtung der Struktur ausgeführt wird, wobei ein zwischen dem Gegenstand und der Struktur angeordnetes elastisch verformbares Mittel (20) zusammengedrückt wird, und der Gegenstand in Bezug auf die Struktur am Ende des Annäherungshubs gehalten wird.

10. Vorrichtung zur Montage und/oder Demontage nach Anspruch 9, **dadurch gekennzeichnet, dass** jedes Betätigungswerkzeug (12) Elemente umfasst, die unter den folgenden ausgewählt sind:
- Elemente zum Einschrauben und/oder Abschrauben (16) der zur Getriebevorrichtung des Riegels (17) gehörenden Schnecke (21),
- Anlageelemente (15), die dazu bestimmt sind, durch Kontakt mit Anlageelementen (25), die mit dem Riegel (17) fest verbunden sind, zum Trimmen und gegebenenfalls Anheben der Struktur zusammenzuwirken,
- Elemente zum Entsperren (30) des Sicherheitsmechanismus des Riegels (17),
- Elemente zum Ausrichten (13, 14) des Betätigungswerkzeugs in Bezug auf den Gegenstand entlang der Längsachse (X) und der Querachse (Y) der Struktur.

11. Verfahren zur Montage eines Gegenstands wie einer Speisebatterie (10) eines Antriebsmotors eines Elektro- oder Hybridkraftfahrzeugs unter einer Struktur wie einem Fahrgestell (11) des Fahrzeugs, **dadurch gekennzeichnet, dass** es die Verwendung eines Systems zum Verriegeln und/oder Entriegeln nach einem der Ansprüche 1 bis 8 und/oder eine Vorrichtung zur Montage und/oder Demontage nach einem der Ansprüche 9 und 10 umfasst.

12. Verfahren zur Demontage eines Gegenstands wie einer Speisebatterie (10) eines Antriebsmotors eines Elektro- oder Hybridkraftfahrzeugs unter einer Struktur wie einem Fahrgestell (11) des Fahrzeugs, **dadurch gekennzeichnet, dass** es die Verwendung eines Systems zum Verriegeln und/oder Entriegeln nach einem der Ansprüche 1 bis 8 und/oder eine Vorrichtung zur Montage und/oder Demontage nach einem der Ansprüche 9 und 10 umfasst.

## Claims

1. System for locking and/or unlocking an object, such as a power battery (10) of a drive engine of an electric or hybrid motor vehicle, under a structure such as a chassis (11) of the vehicle, the system comprising a plurality of locks (17) ensuring the fixing of the object under the structure, the system being **characterized in that** the locks (17) are secured to the object and/or the structure and each comprising on the one hand a hook (19) configured to draw the object in the direction of the structure by compressing a resiliently deformable means (20) inserted between the object and the structure and to support the object relative to the structure at the end of the drawing travel, and on the other hand a transmission device (21, 22, 24) driving the hook (19) during the drawing travel and configured to be actuated by an actuation tool (12) that is separate from the structure and the object.

2. Locking and/or unlocking system according to Claim 1, **characterized in that** the hook (19) is configured so as to vary between a locking configuration supporting the object under the structure and an unlocking configuration releasing the object relative to the structure, and so as to exert a drawing force of the object relative to the structure when passing into the locking configuration so as to implement said drawing over the drawing travel, the drawing force progressively deforming the resiliently deformable means (20) over all or part of the drawing travel and the resiliently deformable means (20) exerting a return force equal to and opposite the drawing force.

3. Locking and/or unlocking system according to Claim 2, **characterized in that** each lock (17) comprises a security mechanism varying between a blocking configuration in which the passing of the lock (17) from one configuration to the other is inhibited and an unblocking configuration in which the passing of the lock (17) from one configuration to the other is permitted.

4. Locking and/or unlocking system according to one of Claims 1 to 3, **characterized in that** the transmission device (21, 22, 24) comprises a worm screw (21) and a pinion (22) engaged with the worm screw (21), the hook (19) being formed integrally with the pinion (22).

5. Locking and/or unlocking system according to Claim 4, **characterized in that** the worm screw (21) comprises a head (24) accessible from a side opposite the structure, under the lock (17), by screwing and/or unscrewing elements (16) belonging to the actuation tool (12).

6. Locking and/or unlocking system according to either of Claims 4 and 5, **characterized in that** the security mechanism comprises blocking elements (31) configured so as to prevent an accidental rotation of the worm screw (21).

7. Locking and/or unlocking system according to one of Claims 1 to 6, **characterized in that** it comprises at least three locks (17), each lock (17) comprising bearing elements (25) intended to cooperate by contact with bearing elements (15) belonging to the actuation tool (12) so as to level the structure about a longitudinal axis (X) of the structure and/or about a transverse axis (Y) of the structure and possibly to lift the structure along a vertical axis (Z) of the structure to an independent height of the structure.

8. Locking and/or unlocking system according to one of Claims 1 to 7, **characterized in that** each lock (17) cooperates with hooking elements (23) secured to the object, in particular at a battery support (18) secured to the drive battery (10), and configured so as to cooperate with the hook (19) of the lock (17) in a manner allowing the application by the hook (19) on the hooking elements (23) of the drawing force of the object in the direction of the structure and the support of the object by the hook (19) at the end of the drawing travel.

9. Device for mounting and/or dismounting an object, such as a power battery (10) of a drive engine of an electric or hybrid motor vehicle, under a structure such as a chassis (11) of the vehicle, the device comprising a locking and/or unlocking system according to any one of the preceding claims and a plurality of actuation tools (12) that are separate from the structure and the object, each actuation tool (12) being configured to actuate the transmission device (21, 22, 24) of a given lock (17) of the system in order to drive the hook (19) thereof so as to draw the object in the direction of the structure by compressing a resiliently deformable means (20) inserted between the object and the structure and to support the object relative to the structure at the end of the drawing travel.

10. Mounting and/or dismounting device according to Claim 9, **characterized in that** each actuation tool (12) comprises elements selected from the following:
- elements (16) for screwing and/or unscrewing the worm screw (21) belonging to the transmission device of the lock (17),
- bearing elements (15) intended to cooperate by contact with bearing elements (25) secured to the lock (17) for the leveling and possibly the lifting of the structure,
- elements (30) for unblocking the security mechanism of the lock (17),
- elements (13, 14) for aligning the actuation tool relative to the object along the longitudinal axis (X) and the transverse axis (Y) of the structure.

11. Method for mounting an object, such as a power battery (10) of a drive engine of an electric or hybrid motor vehicle, under a structure such as a chassis (11) of the vehicle, **characterized in that** it comprises the use of a locking and/or unlocking system according to one of Claims 1 to 8 and/or of a mounting and/or dismounting device according to either of Claims 9 and 10.

12. Method for dismounting an object, such as a power battery (10) of a drive engine of an electric or hybrid motor vehicle, under a structure such as a chassis (11) of the vehicle, **characterized in that** it comprises the use of a locking and/or unlocking system according to one of Claims 1 to 8 and/or of a mounting and/or dismounting device according to either of Claims 9 and 10.
